Europäisches Patentamt

(19) European Patent Office

Office européen des brevets

(11) Publication number: **0 139 507**
**B1**

(12) # EUROPEAN PATENT SPECIFICATION

(45) Date of publication of patent specification: **24.05.89**

(21) Application number: **84306861.0**

(22) Date of filing: **09.10.84**

(51) Int. Cl.⁴: **G 11 B 7/24,** G 11 C 13/04, G 11 C 11/46

(54) Island record films; fabrication.

(30) Priority: **11.10.83 US 540230**

(43) Date of publication of application:
**02.05.85 Bulletin 85/18**

(45) Publication of the grant of the patent:
**24.05.89 Bulletin 89/21**

(84) Designated Contracting States:
**BE DE FR GB NL SE**

(56) References cited:
EP-A-0 083 391
WO-A-83/04336

IBM TECHNICAL DISCLOSURE BULLETIN, vol. 25, no. 8, January 1983, New York. AHN et al.: "Long-life Gold-Based Optical Storage Materials", pages 4200-4202

VACUUM, vol. 27, no. 4, June 1977. ANDERSON et al.: "Structural and Electrical Properties of Discontinuous Gold Films on Glass", pages 329-333

(73) Proprietor: **UNISYS CORPORATION**
**1, Burroughs Place**
**Detroit Michigan 48232 (US)**

(72) Inventor: **Shevlin, Craig M.**
**5200 Piedmont Dr.**
**Santa Rosa, CA 05404 (US)**

(74) Representative: **Kirby, Harold Douglas Benson et al**
**G.F. Redfern & Company Marlborough Lodge 14 Farncombe Road**
**Worthing West Sussex BN11 2BT (GB)**

(56) References cited:
JOURNAL OF THE OPTICAL SOCIETY OF AMERICA, vol. 66, no. 2, February 1966. TRUONG et al.: "Optical Constants of Aggregated Gold Films", pages 124-131

Courier Press, Leamington Spa, England.

Description

The present invention relates to an optical storage medium comprising a film of metal rendered in semicontinuous, "island" form.

Workers in the art of making and using very thin metal films for recording (e.g., order of a few A° to a few hundred A°) are typically interested in making those as continuous as possible, with little or no void area. By contrast, this invention concerns itself with intentionally rendering thin films to be semi-continuous, in "island" (insular) form.

It has been found, and is here explained, that such "insular" films may be laid down (e.g., vacuum deposited) so as to exhibit a fairly uniform pattern of islands and void-intervals, with fairly uniform island size and thickness—doing so with techniques that are (rather precisely) controllable and repeatable, and are relatively straightforward and inexpensive (e.g., using a known type of vacuum deposition).

It has been found that such "insular" films exhibit some advantageous, unexpected properties and characteristics. For instance, when a metal like gold is so deposited (as "islands"), the insular film appears to exhibit (some) properties which are quite a bit different from those of bulk metal (e.g., melting at a much lower temperature), and insular films can be quite advantageously adapted for an optical (laser) records.

One example of a prior art system in which information is stored by selective ablation, evaporation, or removal of a metallic recording layer is described in US—A—4 370 391. The recording medium comprises a substrate, a first stabilising layer, a metallic recording layer, and a second stabilising layer. The first stabilising layer is composed of an auxiliary metal oxide layer and an inorganic compound layer.

EP—A—83396 discloses a film consisting of a substrate, a reflective layer supported on the substrate, a transparent spacer layer, an absorber layer having islands of gold, and a dust cover.

The present invention relates to an optical storage medium comprising a mechanically supportive substrate, a reflective layer supported on the substrate, a transparent spacer layer on the reflective layer, an absorber layer on the spacer layer, the thickness of said spacer layer being selected to co-operate with said absorber layer to provide a dark-mirror effect at a predetermined light wavelength and said absorber layer being a gold island layer.

The invention is characterised by a polymer overcoat on said absorber layer providing fissures adjacent to said absorber layer permitting migration of said gold islands in said absorber layer.

Fig. 1 provides a greatly-enlarged cross-sectional view of an idealized portion of a prior art recording medium;

Fig. 2 provides a similar view of another recording medium;

Fig. 3 is a similar view of a recording medium exhibiting a construction in accordance with principles reflecting the present invention;

Figs. 4 and 6 are idealized plan views of exemplary recorded "bits";

Fig. 5 is a sectional view of another such record;

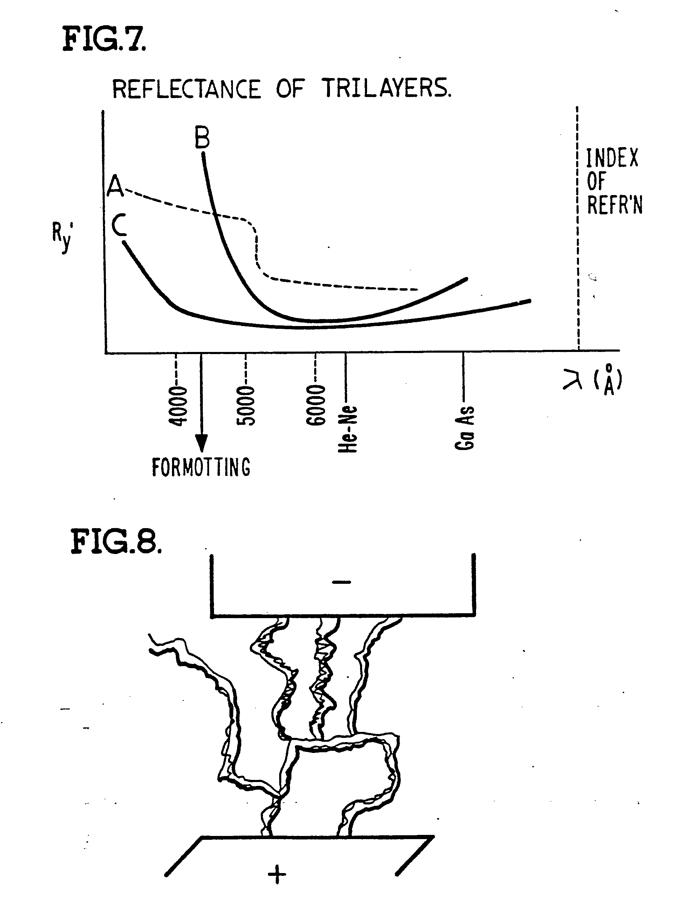

Fig. 7 is a plot of reflectance vs, wavelength for two different exemplary records;

Fig. 8 is a crude idealized plan view, greatly enlarged, of a different "insular" (actually "peninsular") film;

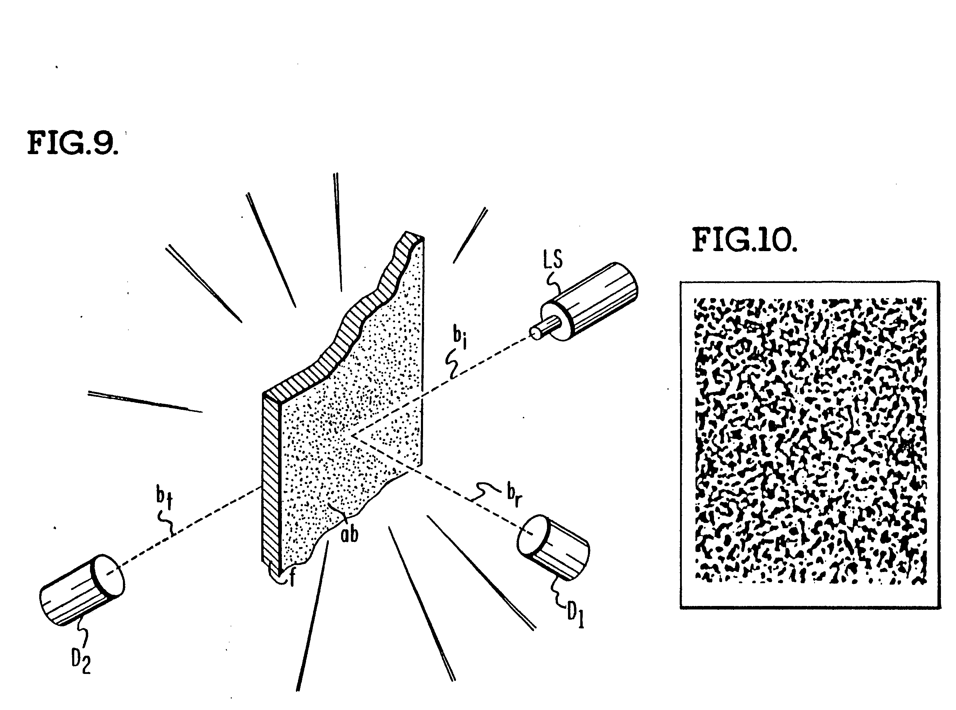

Fig. 9 is a mechanical schematic of a "heat shutter" application of an insular film;

Figs. 10, 11, 12, and 13 are TE micrographs of various "insular" films; and Figs. 14—21 are TE micrographs of yet other examples of "insular" films.

Detailed description

As mentioned, this description should be understood as explained in terms of the fabrication of optical recording films "OR" records) adapted to be "written-upon" by a laser radiation and read-back in like fashion. Such "OR records" will be understood as rendered on an "anti-reflective base. How such a "tri-layer" has heretofore been employed in media using "ablative" absorber films, or other such known "deformational" information structures, will next be discussed.

"Disruptive/deformational" information-structures (using "trilayer"):

According to one known approach (see article by A. E. Bell and F. W. Spong, IEEE J. Quantum Electron., QE14, 487 1978), trilayer optical data storage media utilize a rigid substrate upon which is deposited, in order, an opaque metallic reflector layer, a dielectric spacer, and a thin absorber (or information layer, typically comprised of a low-melting-point metal). The thickness of the dielectric spacer is chosen such that the information layer is at the peak of the standing wave of the optical electric field upon exposure to a focused beam of laser radiation. As the incident radiation is absorbed in a write-site of the information layer, the temperature of this site rises until a physical "disruption" or deformation of the information layer occurs. This disruption, of "deformation" at the write-site, exposes the underlying reflector, resulting in a large and irreversible increase of reflectance, and so creating a written "bit".

With conventional trilayer media, such deformation-disruption of the information layer during a laser write-event may be understood as following one of three mechanisms, as follows:

(1) The information layer may undergo local ablation with material being ejected from the bit site; or

(2) The absorber may undergo local melting, with disruption of the molten metal due to surface tension effects, resulting in a rim of solidified material about the circumference of the bit site; or

(3) The material of the spacer layer may be chosen such that heat conductor to this layer from the information layer causes local decomposition and gas evolution in the spacer. The expanding gas causes a slight deformation of the information layer, and the bit site takes the form of a hemispheric bubble.

These three "bit-forming" processes may be understood, respectively, as "ablation", "rim formation", and "bubble formation"—all being disruptive and/or deformational. That is, those bit-formation mechanisms involve some significant "deformation" and/or "disruption", i.e., either a volume change of significant proportions, or mass transport of debris over distances that are large with respect to the radius of the bit site. As a consequence, all these mechanisms are viewed as inherently incompatible with the usual presence of massive conventional in-contact overcoat. This have given rise to some complex overcoat configurations designed to accommodate these gross physical movements involved in such bit formation; e.g., "air gaps" and other "non-contact" design approaches.

From the standpont of simplicity, durability, and cost of fabrication, the use of an "in-contact" overcoat is attractive and advantageous. For the concept of an "in-contact" overcoat to be feasible in practice, however, the bit formation mechanism must proceed without (the need for) "deformation" or "disruption", i.e., without gross motion or mass transport over distances that are a significant fraction of the bit radius.

"Island" information-structures (not "disruptive/deformational"):

The development of trilayer optical data storage media compatible with an in-contact overcoat is here treated. Such media will be seen to use a conventional metallic reflector and dielectric spacer configuration, but the information layer will constitute a thin, discontinuous (gold) "island-film", representing a significant departure from known approaches. The use of an island film as the information layer gives rise to a unique recording (bit-forming) mechanism—"agglomeration"—that appears capable of being relatively unaffected by the presnce of a massive, in-contact overcoat, especially one having a rough "fissured" contact-face.

The following describes how island films are made and used, and includes details of this "agglomeration" mechanism in trilayer media incorporating island-gold as the information layer. A phenomenological model is presented to explain observed behavior, describing "agglomeration" and how it functions in the presence of an in-contact overcoat.

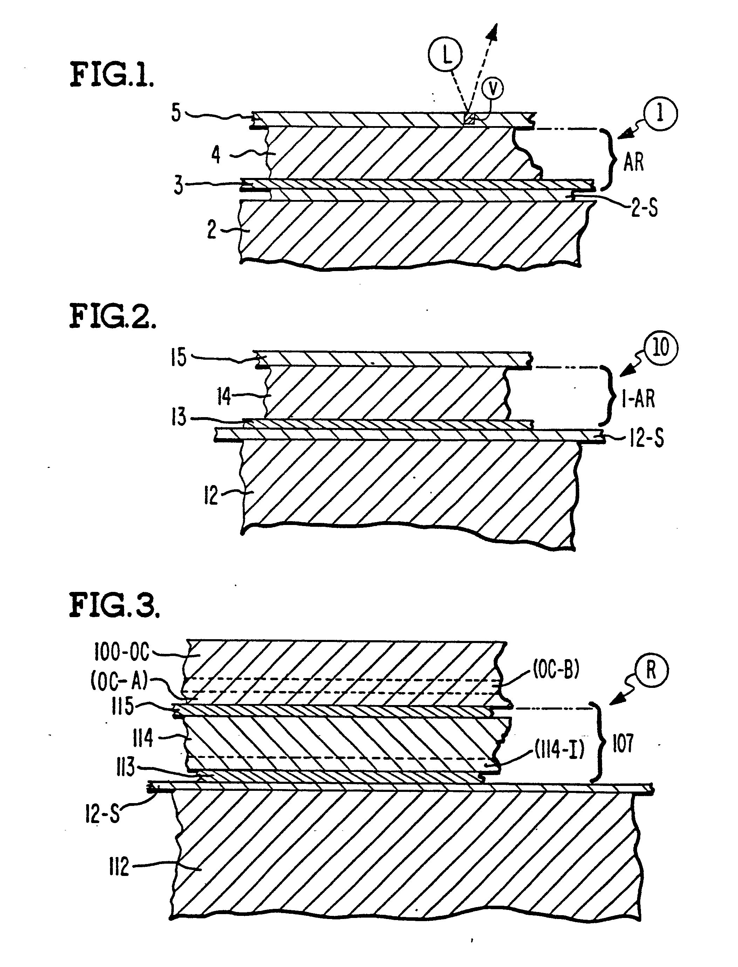

Example I:
Absorber of gold material; Fig. 2:

The operations, material, methods and structure of the "Te Example" (Fig. 1), are followed here, except as otherwise specified, in a record 10 (Fig. 2) having a "gold-absorber" film 15 replacing the tellurium absorber film (5 in Fig. 1).

Record 10 will be understood as comprising a support 12 on which an "anti-reflective base 1-AR is laid (like AR in Fig. 1), comprising a dielectric spacer 14 on an opaque metallic reflective layer 13, with absorber film 15 placed atop spacer 14.

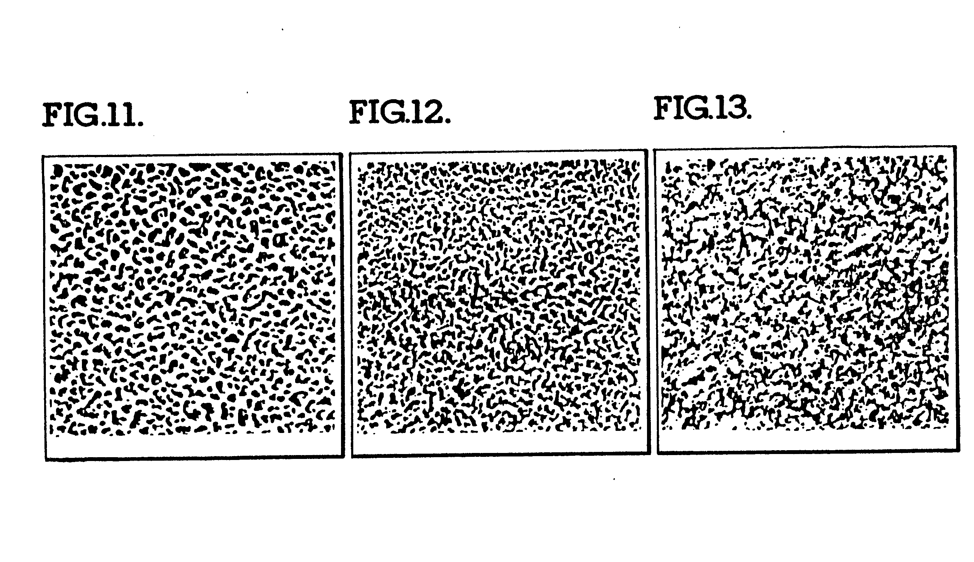

Here, absorber 15 comprises a very thin (minimum mass) film of "gold material" laid down in an "island layer" configuration and intended to function as an absorber film (cf., the Te film in the "Te Example"; e.g., apt for somewhat similar recording methods and with similar means). Here, very close attention is paid, during deposition, to controlling absorber thickness so that mass is minimized, island-uniformity maximized—e.g., monitoring to yield a prescribed minimal "Dark Mirror" reflectance $R_m$ (e.g., here, 10% is suitable) as further described below. It is vital of course that film 15 be laid down to be semi-continuous (discontinuous), being formed in a highly-uniform "island" configuration (e.g., roughly exemplified in Fig. 11, a 100,000×TEM. or Transmission Electromicrograph, and as further described below).

The underlying spacer layer 14, reflector layer 13 and substrate 12 are (at least functionally) otherwise the same as in "Te Example", and thus will be understood as functioning as a "trilayer" (with absorber 15) as understood in the art.

"Gold-island" absorber film 15 may be formed by vapor-depositing gold onto the surface of dielectric spacer 4 until (monitoring the well-known "trilayer" effect) surface-reflectivity of 15 first drops to preselected value $R_m$ (10% reflectance, here), taking care to render the required "insular" (islands) configuration. Reflectance $R_m$ may, conveniently, be set at any desired value consistent with adequate "writing" and readout. Here, an $R_m$ of about 10% is arbitrarily selected (minimum for proper focusing, etc. of this laser). Then, somewhat surprising to discover, "writing" on this island film with a prescribed laser beam can shift reflectance enough to give good readout in the described manner. That is, a "written spot" may be seen to exhibit 22—25% reflectance, yielding desired S/N (in the 25—40 dB range—in some cases a 30—50% increase in satisfactory). Workers will appreciate how other "minimum reflectance" values may be chosen for the "virgin" (unwritten) absorber film.

Preparation details re absorber layer (15; (Fig. 2):

Absorber layer 15 thus comprises an extremely thin, highly uniform, minimum-mass, "island-deposit" of gold which is vapor-deposited (thermally evaporated or sputtered) onto spacer layer 14 (i.e., on a relatively flat; e.g., 0.5 λ record-surface thereof). Somewhat unexpectedly, one finds that if gold is so deposited on such a "trilayer" only until a prescribed "minimum reflectance" $R_m$ (e.g., 10%), the "islands" are formed such that, when subjected to the described laser write-beam (6338 A°, 10 mW for 40 n. sec., etc.), reflectance changes significantly: quite enough for adequate read-out. (E.g., "pure" gold may be so deposited in large vacuum

chamber $0.133 \cdot 10^{-3}$—$0.133 \cdot 10^{-4}$ Pa ($10^{-6}$—$10^{-7}$ Torr.), from a molybdenum boat which is resistance-heated—deposition rate being about 0.5—1.0 nm/sec.). All substrates are cleaned according to present good practice for optical thin films.

A light silica "strike" (alternatively Mg.Fl., or the like) may be likewise vapor-deposited on spacer 14 as a "nucleation-strike" before the gold island film 15 is deposited. The "strike" should, in optimized instances, induce minimum-mass, minimum-size islands uniformly across the spacer.

It is important that this deposition (by thermal evaporation) cease once the reflectance of film 15 first attains the predetermined "minimum/mass/minimum reflectance level" ($R_m$) yielding the desired "islands"—otherwise the contemplated "islands" and associated results may not be produced.

As workers know, such deposition may be programmed empirically, or by continually monitoring the surface-reflectance of a "witness-chip" while absorber film 15 is deposited until satisfactory "islands" begin to appear (see EP—A—0 096 501).

Results of Example I:

The so-written bit sites will exhibit the mentioned "agglomeration" (where absorber islands at a write-site have been made to form spheres, and these spheres coalesce when heated by the write-energy)—this across a write-site diameter comparable to the diameter of the write-beam (e.g., 1/4—3/4 thereof). This "agglomeration" is seen to be accompanied by an associated increase in reflectance and read-out signal.

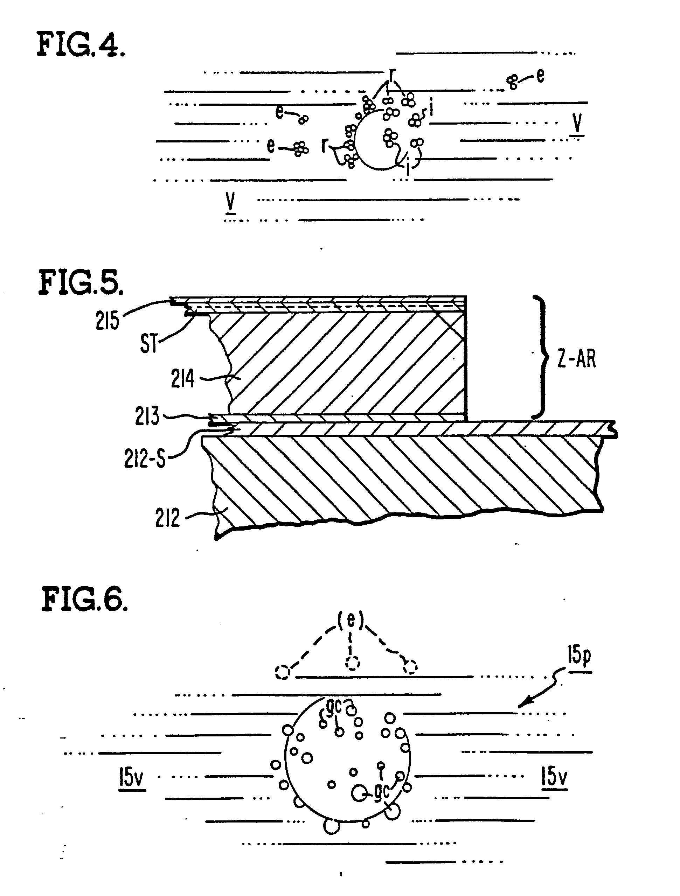

Fig. 6 is an artistic rendering showing such a very crude form of an "agglomerate-hole" (written bit) based on photomicrographs of such records. Here an "agglomerate-hole" $15_p$ will be understood as a somewhat-circular written-spot, or physical optical discontinuity in the "virgin" (unwritten) absorber island film $15_v$. The size of spot 15 may be on the order of laser write-beam diameter (e.g., 40—120% thereof). Within the spot $15_p$, the same amount of absorber material is present, but the write-beam has "agglomerated" (consolidated) tiny islands into "absorber-globs" gL, most of which are relatively larger (and usually fewer) than the tiny "islands" of virgin film $15_v$ and Fig. 11, (and lying relatively farther apart once so written). In effect, spots $15_p$ will be understood as constituting an "optical discontinuity" at the selected read-wavelength ($\lambda w$); whereas the (physically discontinuous) virgin island film $15_v$ appears relatively continuous optically—and a (partial) reflector.

Island form of absorber film:

Fig. 11 is a microscopic plan view (100,000×TE micrograph) of the original, virgin (i.e., unrecorded-upon) reflecting surface of a gold-island absorber film like that above-described. It will be evident that this surface appears as a physically, semi-continuous, or partly discontinuous, "insular" configuration, exhibiting a fairly regular "island" pattern (on an $SiO_2$ spacer-surface). For this Example I, the unwritten islands will be understood as having diameters on the order of a few hundred A° (e.g., 10—30 nm typical), separated by intervals of comparable dimension (e.g., 5—20 nm apart—vs. laser beam 500—1000 nm wide; cf 6328 nm wavelength). The virgin film 15 will thus exhibit a certain "% void" range (e.g., a few % to 40% voids).

Now, subjecting a portion of this virgin film to a laser recording beam as described acts to so "agglomerate" these "islands", increasing the "percent void" in the site (larger island-spacing)—thus forming an "agglomerate-hole" as in Fig. 6, this process being, here, loosely characterized as "agglomeration".

This "island" configuration was not expected—yet more surprising were the unusual "recording properties" realized such as agglomeration—effects which were quite different from any other recording films and from what the properties of "bulk gold" would indicate!

At least some of the first-order factors controlling such island formation are believed to be: absorber material, deposition-rate, adhesion; substrate material and condition (e.g., cleaning, roughness, "strike" film as "nucleation surface") and temperature; presence of vapor-contaminants (vacuum pressure) and like factors as will be appreciated by workers.

For example, too-cool a substrate will render a continuous film, too-hot will leave no film at all. In this regard workers may compare Figs. 12 and 13 with Fig. 11. For Fig. 12, a similar film was prepared (like Example I) except that a silica spacer was coated with a bismuth oxide layer (a "nucleation" aid known in the art). For the Fig. 13 case, a chromium nucleation layer was used. Compared with Fig. 11, the Fig. 12 seemed to exhibit thinner islands, farther apart, while Fig. 13 is a continuous gold film (no islands).

The cited laser apparatus could not "write" at all on the film of Fig. 13 (at cited power level); while the film of Fig. 12 wrote generally as in Fig. 11 (Example I) except for a bit lower sensitivity.

Workers will now appreciated that such an "island" absorber can render certain desired results—taking into account such factors as read-write conditions (e.g., write-energy, beam-width, $\lambda$, etc.). Thus, in Example I satisfactory "bit holes" about 400 to 1000 nm diameter were formed with the specified write-beam, etc. (gave satisfactory S/N, etc.).

As further detailed below, "agglomeration" (for prescribed write/read conditions) seens to require not only a satisfactory (virgin) island film, but depends (at least to some extent) on "island temperature" and "mobility" during writing (i.e., on the maximum temperature reached by "melting" islands and their associated mobility during the agglomeration phase)—these, in turn, depending on virgin-island size and "interfacial energy" of melting islands in contact with the host surface(s).

Desired virgin island pattern:

One infers that island-diameters or separation which are too large (or too small) will not be satisfactory. More particularly, it seems that the virgin size and spacing of the islands should be such as to accommodate a desired agglomeration, upon recording, with average island diameter well below anything approaching a continuous film (i.e., sufficient spacing and percent void to thermally isolate individual islands); yet large enough (% void low enough) so that absorber film 15 "appears" like a (relatively continuous) "optical reflector" at selected λ (R/W lasers). And spacing is presumably large enough so that when a spot is laser-heated (written-upon) it will so "agglomerate" to a significant, detectable extent and form the indicated "agglomerate-hole", causing the film 15 to "optically switch" and exhibit a significant shift in detected reflectance (consistent with required S/N, etc.—i.e., so the "spot" becomes "relatively transparent" now and appears relatively "open" and transparent to the optical system concerned, somewhat like a conventional "pit").

Desired "agglomeration":

Stated otherwise, the write-beam is assumed, here, to so affect the islands in a bit-site as to cause "agglomeration", with attendant "sphericization" and increase in average island size and spacing (increased % void area). One infers that the initial (virgin) % void will be sufficient to accommodate a prescribed minimal heat loss, radially, yet not so large that initial reflectance $(R_o)$ exceeds the desired "near zero" value (required for a "Dark Mirror")—workers will note that so-opening the absorber in a trilayer gives an effective increase in reflectivity (e.g. as here, from about 10% to about 30%).

In general, one may describe this writing operation as so energizing the absorber island film as to, in effect, "significantly redistribute" absorber mass at the bit site—yet not to the extent exhibited by disruptional/"deformational" (non-insular or continuous) films! Thus where an unwritten island site (absorber film only) may exhibit 25% absorption-45% transmission-30% reflection, the "so-written" film site may shift these values to about 10%—70%—20%, respectively, for the subject write wavelength (whereas the overall trilayer values would shift from 90%—0%—10% to 40—50%—0%—60—50%).

As this "writing" so increases the percent void (area), one infers that the write beam evidently so energizes the islands at a write-site that their average size increases and their average spacing increases (i.e., they "agglomerate" to a written pattern of fewer islands).

The cited "Te Example" is also run with a thin overcoating of SiO (10 nm, vapor deposited) on the (continuous) Te absorber film. This simulates an overcoat, but does not afford a true, full functional overcoat of the kind worders typically postulate (like several mils of a transparent polymer to permit record handling without scratching, to "defocus" surface dust, grime, etc.; to impede vapor entry, e.g. of water, oxygen. But this light SiO coat will nonetheless affect Te "pit formation", raising required write-energy to about double. (Possibly because it so restricts the Te film at the pit-site as to impede associated displacement of Te material there).

Workers have expected that such "deformational-disruptive recording" (as with pits in Te, bubbles in other metals, etc.) would be resisted by any "overcoat" (e.g., read-out signal destroyed; sensitivity raised—the overcoat impeding, if not prohibiting, absorber translation, deformation and/or expulsion from the bit-site, and barring any "ejecta" of course).

Significantly, however, when a gold island-film like those here described is similarly over-coated (herewith Example I-A), little or no such resistance is evident and sensitivity is only slightly degraded—if at all—further evidence that a different type of bit-forming mechanism is at work. As detailed below, such an absorber coating $(SiO_2)$ is disfavored in favor of a more "fissured" coating like the described "modified fluoro-polymer".

As workers will agree, this reinforces the theory that the instant recording mechanism is quite different from Te pit formation (evidently whatever deformation and/or movement of the island mass accompanies such low-power writing of a "bit", its is better tolerated by an overcoat, i.e., the overcoat presents less resistance to the bit-forming mechanism—this being consistent with the described "agglomeration"). This amplifies the attractiveness of such insular absorbers, since tolerance to overcoating is very important.

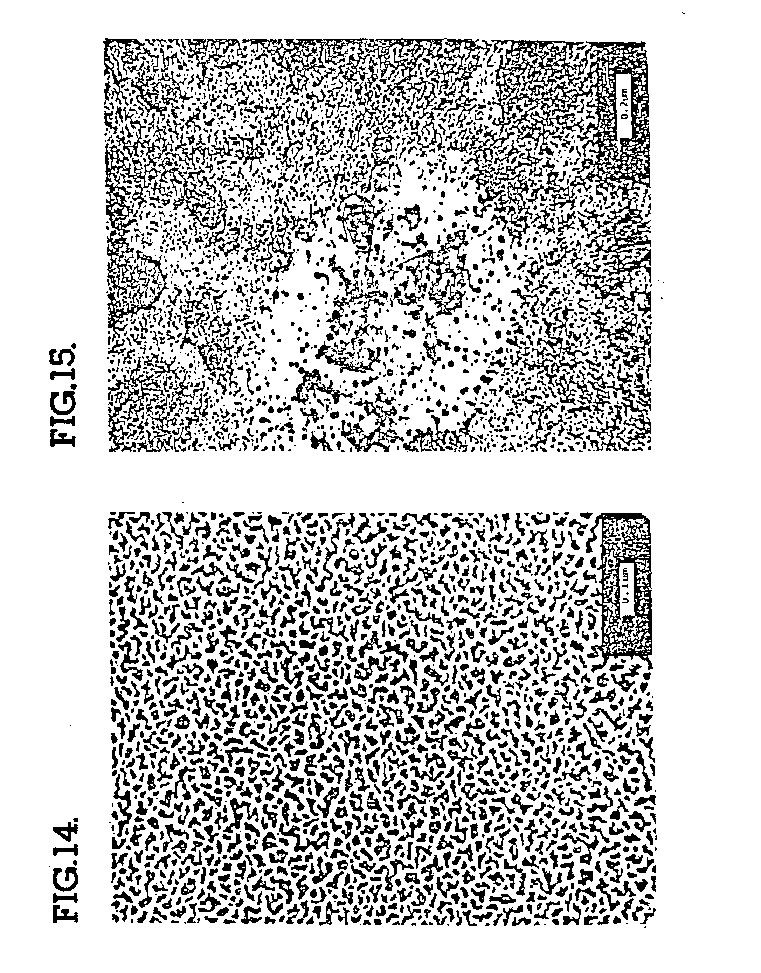

TE micrographs (Figs. 14—21):

Here, the transmission electron microscope (TEM) is utilized as a major analytical technique to study the morphology, and elucidate the mechanism, of bit formation in trilayer media with island-gold as the information layer. This is an especially powerful technique when combined with a media performance diagnostic such as a laser read/write system because it allows the direct correlation of media performance parameters, such as read signal amplitude and signal-to-noise ratio, with actual data bit morphologies as observed in the TEM.

For the examples of Figs. 14—21, trilayer optical recording exemplars for TEM examination are deposited upon carbon pre-coated 200 mesh copper grids. The coatings consist of an aluminum reflector, dielectric spacer later and a gold absorber layer. An electron-transparent overcoat is also applied in select cases.

Laser writing on such TEM specimens is carried out using a read/write system incorporating a modulated helium-neon laser. Read/write wavelength is 632.8 nm. A lens with .65 numerical aperture is used and the spot size is 0.8 micron. Prior to TEM examination, data bits written on the TEM specimens are located using an optical microscope. This facilitates subsequent location of the written bits in the TEM.

TEM examination is carried out using a Zeiss EM-109 electron microscope operated at 100 kilovolts. Specimen damage due to electron beam heating effects is not a problem during routine examination. With extremely high electron beam current density, however, in-situ morphological changes in the island-gold films, can be initiated; these are helpful in understanding the phenomenology of heating effects in these films.

Example II:

A gold island-film is deposited on a dielectric spacer layer (e.g., as in Example I, but omitting the reflector layer, using carbon-coated copper grid as "substrate" as above noted).

Results (Fig. 14):

Fig. 14 shows the so-deposited virgin (unwritten) island film. Here the reflector layer is not present in order to simplify the examination of the morphology of the as-deposited gold. The result is seen in Fig. 14, a bright field micrograph.

The gold film evidently consists of irregularly shaped islands with an areal coverage of approximately 60 percent. Many of the islands are long and narrow in shape, while some others are roughly circular. Average island spacing is on the order of 100 A° ($1 \times 10^{-2}$ µm).

The use of an island metal film as the information layer in the trilayer optical storage medium is attractive for two reasons. First, the discontinuous structure of the film tends to minimize radial thermal losses during the write pulse. Second, long range surface tension forces, characteristic of media in which rim formation predominates, are absent.

"Fissured" contact-face:

Here, and elsewhere, it will also be understood that the "contact-face" of the (fluoro-polymer) overcoat (and, possibly, the under layer spacer), facing the (gold) islands, if in some sense "fissured", or covered with channels disposed and dimensionsed to allow a great deal of mobility to the "melting-islands" so they may readily "agglomerate". "Non-fissured" contact faces (e.g., of $SiO_2$) presumably inhibit such mobility.

Example III:

Example II is replicated, except that a full trilayer (with reflector on fluoro-polymer spacer) is produced; also light overcoating of fluoro-polymer (face "fissured") is overlaid on the gold-island absorber. Further, a light $SiO_2$ strike is applied on the spacer to better "nucleate" gold isles. Then a "bit" is laser-recorded at a bit-site on this structure (10 mW, 40 ns pulse from He-Ne laser operated at 632.8 nm).

Results (Fig. 15):

Fig. 15, a micrograph of the so-written trilayer medium, with overcoat, demonstrates agglomeration. Here, written data bit is visible in the central portion of the micrograph, while outside the written data bit, the original (virgin) island structure, similar to that shown in Fig. 14, is visible.

Note that the presence of the aluminum reflector layer adds an additional degree of complexity to the interpretation of this micrograph. This layer is polycrystalline with random crystal orientation. In the TEM, aluminum crystals suitably oriented for Bragg diffraction (i.e., in contrast) will appear as dark areas, while other crystals, not suitably oriented, will be invisible. In the micrographs shown here, aluminum crystals in the reflector layer which are "in contrast" appear as dark areas approximately 0.1 to 0.4 microns in diameter.

It will be clear from the Fig. 15 micrograph that the laser "write-event" has caused a marked change in the morphology of the island-gold information layer. The original, irregularly shaped islands have been replaced by a distribution of spherical particles whose "number density" is substantially less than that of the initial island configuration. The sphericity of the particles in the written area implies that melting has occurred, while the reduced number density of particles indicates that agglomeration or coalescence of molten particles has taken place. It is important to note that the change in reflectance of the trilayer medium associated with this melting and agglomeration process is quite substantial. The original trilayer, with reflectance of 10% at 632.8 nm, increases reflectance after writing, to 50% at the same wavelength. The signal to peak rms noise ratio, typical of written data with the bit morphology of Fig. 15, is 30 dB over a 20 mHz bandwidth. Thus, while there are optical losses associated with the bit morphology shown in Fig. 15, they do not seriously degrade the optical performance of the medium. (Note: absence of a thick, full overcoat here is understood to enhance read-out, but only slightly—e.g., vs. read-out with full overcoat as with Fig. 2, etc.—and, vs, un-overcoated state output is degraded by about one-half—with smaller, less massive virgin isles one may expect to improve sensitivity, read-out, etc., as explained below).

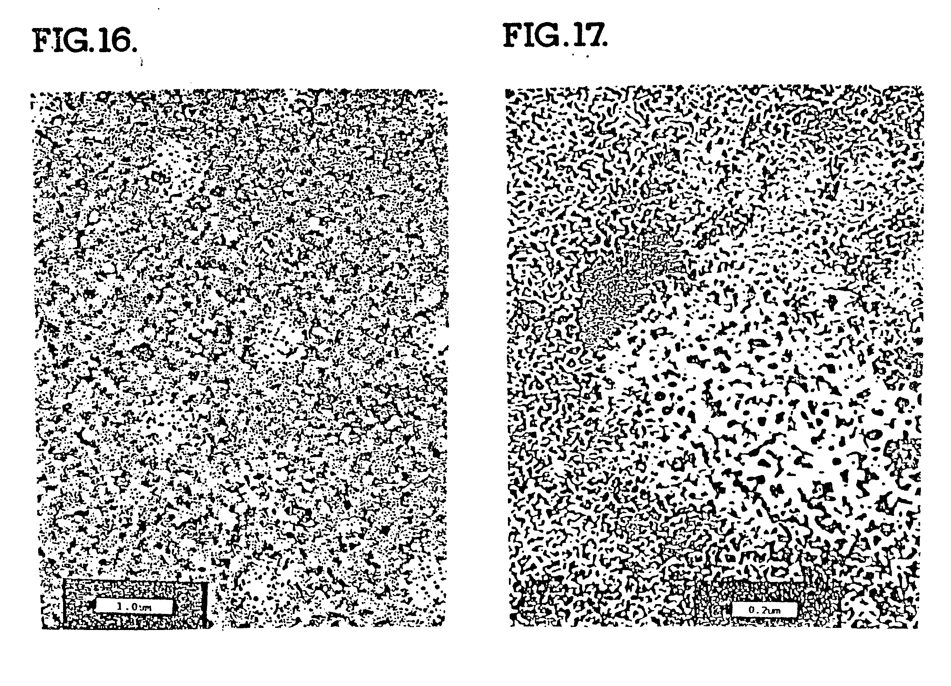

Example III-A (Fig. 16):

Example III is replicated with bits "written" (same laser energy) along a number of "tracks".

Results: appear in Fig. 16 (TEM like Fig. 15, but lower magnification, and showing several "tracks" (aligned written-bits)—running "vertically"; being spread about 1.2 microns apart). Otherwise, this is essentially as in Example III.

Example III-B (Fig. 17):

Example III is, again, replicated; except that "writing" is conducted at much reduced laser energy (up to about 1/10—1/20 that of Figs. 15, 16—more analogous to "threshold power").

Results:

Fig. 17 indicates the "incipient" (or "threshold") agglomeration implicit in such "under-power" writing (e.g, bit formation presaging that of Figs.

15, 16). That is, here, it appears that the very low power laser pulse has brought about some change in island shape due to melting, with some spherical particles in evidence, but the agglomeration process has not gone to completion. Increased write-power will presumably give agglomeration more like that of Figs. 15, 16.

Bit-forming via "agglomeration":

The foregoing micrographs (Figs. 14—17) demonstrate a bit formation process which is essentially one of melting and agglomeration of the island-gold film to form a distribution of spherical debris particles. The final size and arrangement of the debris particles should be functions of the maximum temperature which is reached by the molten islands, and of the mobility of the islands during the agglomeration phase.

As the island-gold film is exposed to the write pulse of the laser, the temperature of the islands rises due to the enhanced absorption inherent to the trilayer structure. At some point in time a melting event occurs which is accompanied by a change in shape of the islands. This shape change, exemplified by the micrograph of Fig. 17, is driven by the increase in "interfacial energy" for the now-molten gold at the spacer and overcoat interfaces. A consequence of the shape change is the initiation of a "detuning" of the optical absorption of the trilayer, which is accompanied by a decrease in the rate of temperature rise. The temperature at which the melting event occurs is thought to be in the range of 300°C. to 600°C., well below the bulk melting temperature of gold.

"High-threshold" media (Big globs-high noise):

Here, assume Sample Example IV, same as for Fig. 15 except that nucleation-strike is tin.

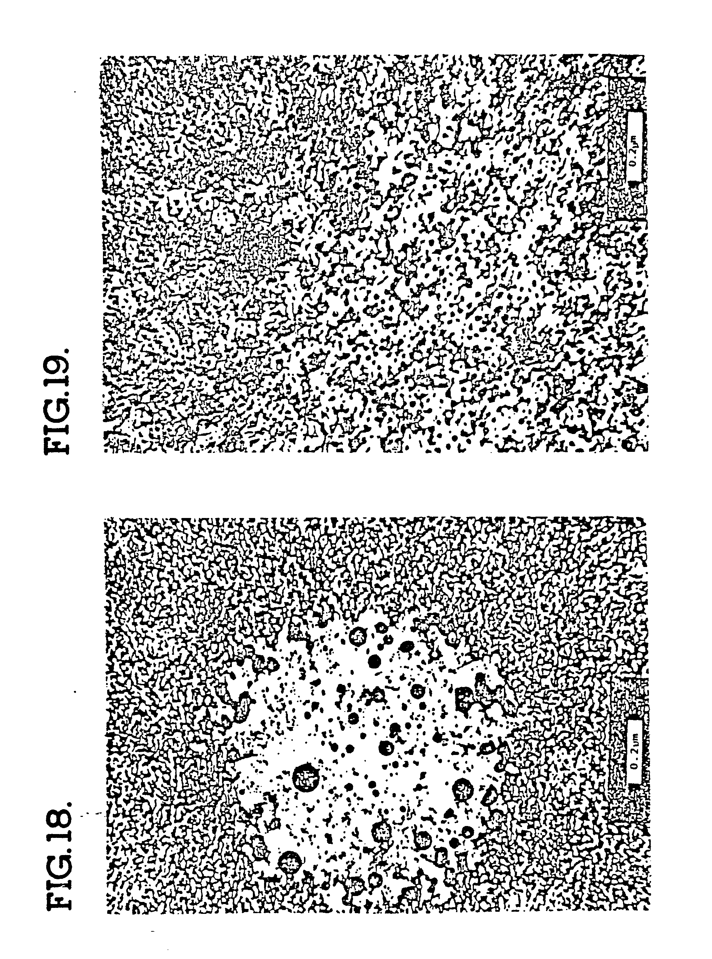

The minimum laser write power necessary to bring the island-gold to the critical temperature required for melting, with the shape change and trilayer detuning which accompany it, may be understood as the "threshold" power for a given medium. For media which have a high threshold power, island temperatures are high prior to the initiation of melting and detuning of the trilayer. An example, Example IV, of bit formation in such a medium is shown in Fig. 18, which is a TEM micrograph of a trilayer with an island-gold information layer, written with a 10 mW, 40 ns laser pulse. Here, as a consequence of the high temperature attained prior to melting, island mobility has been enhanced and the agglomeration process prolonged. This has resulted in the distribution of extremely large spherical particles visible in the written bit. In this example, there is also a marked tendency for the spherical particles to migrate toward the edge of the written area. This effect is a consequence of the radial thermal gradient imposed by the Gaussian write pulse. The particles thus tend to move down the thermal gradient to the cooler regions at the edge of the bit. From the standpoint of media performance, the bit morphology shown in Fig. 18 is undesirable, as the non-uniform distribution of extremely large debris particles ("Big Globs") reduces peak-to-peak signal-to-noise ratio.

(Note: The Fig. 18 sample, or Example IV, may be understood as essentially the same as that of Fig. 15, except that a tin strike is substituted for the $SiO_2$ strike—thus, in light of the indicated "Massive agglomeration" of Fig. 18, with fewer, larger globs, non-uniformly distributed (by same write-energy), one might characterize a Sn-strike, or nucleating film, as "high threshold-high noise" where the $SiO_2$ strike could be characterized as "low threshold-low noise" for such gold absorbers—see further below).

Also, where such Massive agglomeration (mobility) is presumably inhibited by the subject "contact-faces" (e.g., channels in fluoro-polymer overcoat evidently don't "freely pass" these), one will assume that other, more-widely-fissured contact faces will inhibit it less (cf. improvement feature).

"Low-threshold" media (tiny globs-low noise):

Here, assume Example V (Fig. 19), same as for Fig. 15 except spacer is another modified fluoro-polymer and has no nucleation film thereon.

In cases where the threshold is very low, island temperatures at the onset of melting and trilayer detuning are low, and the island agglomeration process is curtailed (poor agglomeration, more globs, very small). An example (Example V) of bit formation in a medium which exhibits this behavior is shown in Fig. 19. In this island-gold trilayer medium written with a 10 mw, 40 ns laser pulse, the areal density of debris particles in the data bit is only slightly lower than the areal density of gold islands in the unwritten regions. Thus, while the islands have melted and reverted to tiny spheres, effectively detuning the trilayer, the low temperatures involved have inhibited the island agglomeration process. The resulting data bit is, in fact, rather difficult to see (center of Fig. 19) with the eye. This uniform distribution of very small spherical particles, however, results in a high signal-to-noise ratio, typically exceeding 30 dB.

A characteristic of media with low thresholds is increased bit diameter for a given write power, as compared to media with high thresholds. Due to their lower temperature for melting and optical detuning of the trilayer, low threshold media more effectively utilize the outer, lower power regions of the incident Gaussian beam.

Thus, Example V (Fig. 19) may be characterized as "Low Threshold" (low noise), yet still lacking in full complete agglomeration. Of course, more complete agglomeration will yield increased reflectance shift ($\Delta R$) and thus usually be desired.

Effect of an in-contact overcoat:

As mentioned earlier, trilayer bit formation mechanisms which involve gross motion, as in rim formation or bubble formation, are inherently incompatible with the presence of a massive, in-contact overcoat. Even in cases where the mechanical properties of the overcoat material are tailored to minimize constraining effects upon the bit formation mechanism, the degradation in performance after overcoating is substantial.

In contrast, the bit formation mechanism described above, for island-gold media, does not involve mass transport over long distances. It involves localized rearrangements of the gold islands which do not necessitate large displacements of adjacent surfaces. As the gold islands cover only approximately 60 percent of the available area, ample space exists to accommodate this rearrangement. Of course, there must be limits to the extent to which the agglomeration process can proceed without being affected by a massive overcoat. The bit morphology shown in Fig. 18, for example, involves the formation and motion of very large particles, and cannot proceed unimpeded in the presence of the usual in-contact overcoat.

Example VI
(medium-writing unaffected by overcoat):
Example II is replicated except that the $SiO_2$ "strike" on the spacer (nucleating strike) is replaced by another, "low-threshold" material, but one fostering better, more complete agglomeration—and inducing smaller, reduced-mass virgin islands; and processed accordingly.

Writing is conducted as in Example II, etc.

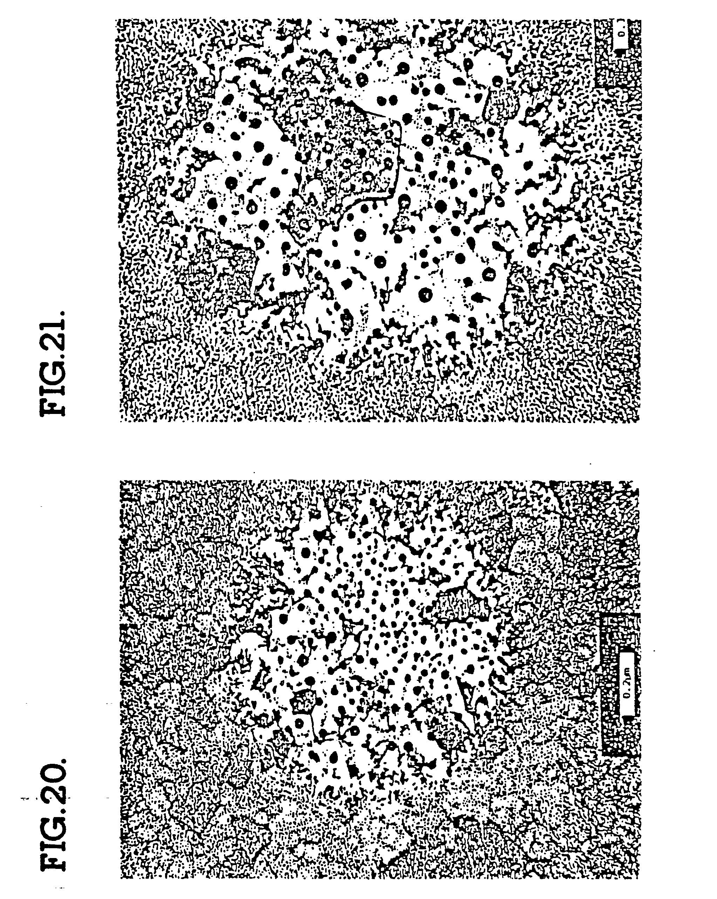

Results (Figs. 20, 21):
In this sample, optimal (virgin) island deposition is achieved as well as optimal bit-formation (agglomeration, with "low threshold").

More particularly, island deposition evidently (see TEM Fig. 20, showing an as-written "bit-"—magnified 2× in Fig. 21) yields the smallest islands (least mass, smallest diameter) on the average, of all Examples herein. This evidently due (in part, at least) to the superior nucleation-film used.

And, as Fig. 20 indicates, this sample yields superior agglomeration and other writing effects (bit-formation; e.g., vs. samples of Fig. 15, or Fig. 19, etc., when similarly written-upon).

Surprisingly, bit formation (agglomeration) in this sample medium manifests no degradation in the presence of a massive, in-contact overcoat (as shown in Fig. 20)—something astonishing to workers in this art!

In this sample, the diameter of the as-deposited (virgin) gold islands is extremely small, averaging approximately 80 A°. The data bit (Fig. 20, center), written with a 10 mW, 40 ns laser pulse, exhibits a highly uniform distribution of spherical debris particles. Incipient melting and agglomeration effects, visible at the edge of the written bit, delineate a "threshold region".

Figure 21:
Fig. 21, a micrograph of anothee like written data bit in the same medium (and same write-energy, etc.) shows this "threshold region" at higher magnification. Also, here, the associated "contact surfaces" evidently accommodate, or induce, "small-glob" incipient agglomeration (more, smaller globs), typical of a "moderate to low threshold" surface (cf. same fissed fluoro-polymer overcoat as before).

Some conclusions:
Table A-1
Thus, in light of the subject teachings, a worker can, in designing and fabricating an optical disk record for given read-write radiation (energies-)—presumably using an "information layer" (absorber) with anti-reflective background and suitable "fissured-face" overcoat, as above—optimize sensitivity and bit-formation (etc.) via teachings herein, such as the following:

1. Apply the absorber layer as a very thin, minimum-mass, minimum-size island configuration (e.g., "nucleating-strike" can help too—one can monitor for "first reflectance minimum" while depositing);

2. if he desires, use a relatively "high-melting-point" absorber material (e.g., gold for extended service life);

3. preferably optimize sensitivity by making virgin-isles very small (minimum mass, size) and uniform in size, being uniformly spaced and distributed—and also he can arrange "contact surface" characteristics (interfacial energy vs. molten, isle; with relatively "low threshold" surfaces) to induce the smallest, most uniform (size, distribution) written-globs, and full-agglomeration (at relatively moderate temperature, yet with high molten-isle "mobility"—interfacial energy being only high enough to assure good spherical agglomeration at moderate energies, yet little higher lest threshold T° be raised unduly and "Massive-glob" agglomeration induced);

3a. substrate characteristics can help optimize this—e.g., a fluoro-polymer with light nucleating strike of $SiO_2$, $MgF_2$ or the like, to form minimum-mass virgin islands; whereas, surfaces of Cr, Bi, Al, or their oxides, are "non-helpful";

3b. "fissured-face" overcoat (e.g., fluoropolymer) also helps, as above-explained.

Contact-surface factors (molten islands vs. surface of underlying and/or overlying layer):
For adequate island migration (mobility) and "agglomeration", one supposes that the "interface region" between the (top of the) spacer layer and (underside of the) overcoat—i.e., where the island-gold information layer resides—exhibits passages (channels, gaps, etc.) through which molten islands can migrate. How readily this occurs along these passages will be determined by island size and temperature, and by the relative "interfacial energy" (i.e., energy of molten gold in contact with the surrounding host surfaces). Thus, a "non-fissured" overcoat like the well-known $SiO_2$ is undesirable (though $SiO_2$ is desirable as a nucleating "strike" film on the substrate-spacer), whereas a fluoro-polymer is quite apt (CF. "fissured face" discussed).

When the gold islands are large (e.g., see Fig.

18) with respect to such passageways (that must accommodate their agglomerating-travel), such migration will presumably be impeded. When the temperature (of melting) is low and trilayer detuning is relatively minimal, migration distances (prior to cooling and solidification) will be short.

The magnitude of this "interfacial energy" (of melting gold in contact with surrounding surfaces) is important in two respects. First, it is the increase in interfacial energy, upon melting, which causes the gold islands to assume their spherical shape (they tend to minimize surface area per unit volume). Any increase in surface energy, therefore, represents a barrier to melting and will effectively raise the "threshold temperature" at which trilayer-detuning commences.

Second, the driving force for agglomeration is the decrease in surface energy per unit volume represented by a distribution of "fewer large particles", rather than more small particles.

The bit-formation exemplified in Figs. 20 and 21 represents a more optimal balance of the above considerations. Thus, min-mass (-size) virgin isles (extremely small initial island size) assures the free-est and least-impeded migration; moreover, it can impart an extremely high initial surface area per unit volume, and thereby increase the driving force for agglomeration. Thus, the Example VI situation will usually be most preferred.

A phenomenological model for the agglomeration mechanism:

The bit-formation (agglomeration) mechanism here proposed for trilayer media incorporating island-gold as the information layer is believed to consist of two stages: melting, then agglomeration; that is:

1st. Melting of gold islands, accompanied by a shape change (more spherical) and simultaneous optical-detuning (here ΔR) of the trilayer; and

2nd. Subsequent movement and coalescence (agglomeration) of the molten islands to form a distribution of large globs (spherical debris-particles) in which the optical losses are small.

The effective temperature at which melting and trilayer-detuning occur is determined by "interfacial energy differences" between the solid and liquid states (of gold) in contact with the host (spacer, overcoat) surfaces. This effective melting temperature is thought to be well below the bulk melting temperature of gold.

The shape change associated with island melting is a consequence of an increase in interfacial energy with the change from solid to molten gold in contact with the host surfaces. Upon melting, the gold islands, irregular in shape as-deposited, revert to tiny spheres, thereby minimizing contact area at the (presumed) high energy interfaces.

Workers will understand that optimal agglomeration appears to require that contact-surfaces (substrate, overcoat in contact with the molten islands) during "writing" not only be "fissured", but also exhibit a characteristic "interfacial energy" $E_{if}$ with the molten isles. Energy $E_{if}$ may be understood as consonant with a "wetting" or physical affinity (of molten isle to contact-surface).

In cases where the increase in interfacial energy with the change from solid to liquid gold in contact with the surrounding material is large, an energy barrier to melting exists which cause the effective melting temperature to be high. This situation corresponds to a medium with a high threshold power for writing (and low island-mobility).

In cases where the increase in interfacial energy is small, the effective melting temperature is low. This situation corresponds to a medium with a low threshold power for writing.

The driving force for agglomeration of the molten gold islands is the decrease in surface energy per unit volume represented by the change from a configuration of many tiny particles to a configuration of few large particles.

The mobility of molten islands during the agglomeration phase is a function of their temperature and their size. Small islands utilize available passages at the spacer/overcoat interface more efficiently than large islands, and are thus more mobile. High temperatures imply a longer migration lifetime, thus prolonging the time available for agglomeration prior to solidification (cooling, which the de-tuning encourages, of course).

**Claims**

1. An optical storage medium (2, 3, 4, 5 or 12, 13, 14, 15, or 112, 113, 114, 115 or 212, 213, 214, 215) comprising a mechanically supportive substrate (2 or 12 or 112 or 212), a reflective layer (3 or 13 or 113 or 213) supported on the substrate (2 or 12 or 112 or 212), a transparent spacer layer (4 or 14 or 114 or 214) on the reflective layer (3 or 13 or 113 or 213), an absorber layer (5 or 15 or 115 or 215) on the spacer layer (4 or 14 or 114 or 214), the thickness of said spacer layer (4 or 14 or 114 or 215) being selected to co-operate with said absorber layer (5 or 15 or 115 or 215) to provide a dark-mirror effect at a predetermined light wavelength, and said absorber layer being a gold island layer, characterised by a polymer overcoat on said absorber layer providing fissures adjacent to said absorber layer permitting migration of said gold islands in said absorber layer.

2. An optical storage medium according to Claim 1, wherein said polymer overcoat is a fluoro-polymer layer.

3. An optical storage medium according to Claim 1 or Claim 2, wherein said fissures are in the form of channels disposed and dimensioned to promote mobility of said golds islands so that they may readily agglomerate where subjected to radiation energy without reliance upon ablation, rim-formation, or bubble-formation.

4. An optical storage medium according to any of the preceding claims, wherein said spacer layer is a silicon dioxide layer.

5. An optical storage medium according to any of Claims 1 to 3, including a strike layer (ST) between said spacer layer and said absorber layer.

6. An optical storage medium according to Claim 5, wherein said strike layer is a light silica strike.

7. An optical storage medium according to Claim 5, wherein said strike layer consists of chromium.

8. An optical storage medium according to Claim 5, wherein said strike layer consists of magnesium fluoride.

9. An optical storage medium according to Claim 5, wherein said strike layer consists of bismuth oxide.

10. An optical storage medium according to Claim 8, wherein said spacer layer is a fluoro-plastic layer.

11. An optical storage medium according to Claim 10, wherein said fluoro-plastic is a fluoro-polymer.

12. A method of fabricating an optical recording medium (2, 3, 4, 5 or 12, 13, 14, 15, or 112, 113, 114, 115 or 212, 213, 214, 215, ST) including the steps of: depositing a reflective layer (3 or 13 or 113 or 213) on a supportive substrate (2 or 12 or 112 or 212); depositing a transparent spacer layer (4 or 14 or 114 or 214) on said reflective layer: depositing a strike layer (ST) on said spacer layer; depositing an absorber layer (5 or 15 or 115 or 215) over said strike layer; and depositing an overcoat (OC) on said absorber layer, said absorber layer being a gold island layer, and said overcoat being a polymer overcoat providing fissures adjacent to said absorber layer permitting migration of said gold islands in said absorber layer.

13. A method according to Claim 12, wherein said soft polymer overcoat (OC) is a fluoro-polymer layer.

14. A method of recording information on a storage medium according to Claim 1, wherein a modulated light beam of said predetermined wavelength is moved relative to said medium, the energy of said beam being selected to record said information by causing said gold islands to agglomerate so that the number of islands is reduced and the spacing between them is increased at each bit site, said fissures in said overcoat being dimensioned to maximise mobility of said islands when subjected to radiation at the predetermined wavelength and the selected energy.

**Patentansprüche**

1. Optisches Speichermedium (2, 3, 4, 5 oder 12, 13, 14, 15 oder 112, 113, 114, 115 oder 212, 213, 214, 215), umfassend ein mechanisch tragendes Substrat (2 oder 12 oder 112 oder 212), eine reflektierende Schicht (3 oder 13 oder 113 oder 213) auf dem Substrat (2 oder 12 oder 112 oder 212), eine transparente Abstandsschicht (4 oder 14 oder 114 oder 214) auf der reflektierenden Schicht (3 oder 13 oder 113 oder 213), eine absorbierende Schicht (5 oder 15 oder 115 oder 215) auf der Abstandsschicht (4 oder 14 oder 114 oder 214), wobei die Dicke der Abstandsschicht (4 oder 14 oder 114 oder 214) so gewählt ist, daß sie mit der sorbierenden Schicht (5 oder 15 oder 115 oder 215) zusammenwirkt, um bei einer vorgewählten Lichtwellenlänge einen Dunkelspiegeleffekt zu geben, und wobei die absorbierende Schicht eine Goldinselschicht ist, gekennzeichnet durch einen Polymerüberzug auf der absorbierenden schicht, welcher der absorbierenden Schicht benachbart Risse bereitstellt, die die Wanderung der Goldinseln in der absorbierenden Schicht erlauben.

2. Optisches Speichermedium nach Anspruch 1, wobei der Polymerüberzug eine Fluoropolymerschicht ist.

3. Optisches Speichermedium nach Anspruch 1 oder 2, worin die Risse die Form von Kanälen haben, die so angeordnet und bemessen sind, daß sie die Beweglichkeit der Goldinseln fördern, so daß diese sich leicht zusammenballen, wenn sie Strahlungsenergie ausgesetzt werden, ohne Abhängigkeit von Ablösung, Rand- oder Blasenbildung.

4. Optisches Speichermedium nach einem der vorstehenden Ansprüche, worin die Abstandsschicht eine Siliziumdioxidschicht ist.

5. Optisches Speichermedium nach einem der Ansprüche 1 bis 4, umfassend eine Anlaufschicht (strike layer) (ST) zwischen der Abstandsschicht und der absorbierenden Schicht.

6. Optisches Speichermedium nach Anspruch 5, wobei die Anlaufschicht von einem leichten Anlauf von Siliziumdioxid gebildet wird.

7. Optisches Speichermedium nach Anspruch 5, worin die Anlaufschicht aus Chrom besteht.

8. Optisches Speichermedium nach Anspruch 5, worin die Anlaufschicht aus Magnesiumfluorid besteht.

9. Optisches Speichermedium nach Anspruch 5, worin die Anlaufschicht aus Wismutoxid besteht.

10. Optisches Speichermedium nach Anspruch 8, worin die Abstandsschicht eine Schicht aus Fluorokunststoff ist.

11. Optisches Speichermedium nach Anspruch 10, worin der Fluorokunststoff ein Fluoropolymer ist.

12. Verfahren zur Herstellung eines optischen Aufzeichnungsmediums (2, 3, 4, 5 oder 12, 13, 14, 15 oder 112, 113, 114, 115 oder 212, 213, 214, 215, ST), mit folgenden Schritten:

Abscheidung einer reflektierenden Schicht (3 oder 13 oder 113 oder 213) auf einem tragenden Substrat (2 oder 12 oder 112 oder 212);

Abscheidung eine durchsichtigen Abstandsschicht (4 oder 14 oder 114 oder 214) auf der reflektierenden Schicht;

Abscheidung einer Anlaufschicht (ST) auf der Abstandsschicht;

Abscheidung einer absorbierenden Schicht (5 oder 15 oder 115 oder 215) auf der Anlaufschicht; und

Abscheidung eines Überzugs (OC) auf der absorbierenden Schicht, wobei die absorbierende Schicht eine Goldinselschicht ist und der Überzug ein Polymerüberzug ist, der Risse benachbart zur absorbierenden Schicht bereitstellt, die das Wandern der Goldinseln in der absorbierenden Schicht erlauben.

13. Verfahren nach Anspruch 12, worin der welche Polymerüberzug (OC) eine Fluoropolymerschicht ist.

14. Verfahren zur Aufzeichnung von Informationen auf einem Speichermedium gemäß Anspruch 1, bei dem ein modulierter Lichtstrahl der vorgewählten Wellenlänge relativ zum Medium bewegt wird, wobei die Energie des Strahls so gewählt ist, daß die Information dadurch aufgezeichnet wird, daß die Goldinseln sich zusammenballen, so daß die Anzahl der Inseln vermindert und der Abstand zwischen ihnen an jeder Bit-Stelle vergrößert wird, wobei die Risse im Überzug so dimensioniert sind, daß sie die Beweglichkeit der Inseln maximalisieren, wenn diese bei der vorbestimmten Wellenlänge und der gewählten Energie der Strahlung ausgesetzt werden.

**Revendications**

1. Support de mémoire optique (2, 3, 4, 5 ou 12, 13, 14, 15 ou 112, 113, 114, 115 ou 212, 213, 214, 215) formé d'un substrat de support mécanique (2 ou 12 ou 112 ou 212), d'une couche réfléchissante (3 ou 13 ou 113, ou 213), portée par le substrat 2 ou 12 ou 112 ou 212), d'une couche d'espacement transparente (4 ou 14 ou 114 ou 214) sur la couche refléchissante (3 ou 13 ou 113 ou 213), d'une couche absorbante (5 ou 15 ou 115 ou 215) sur la couche d'espacement (4 ou 14 ou 114 ou 214), l'épaisseur de la couche d'espacement (4 ou 14 ou 114 ou 214) étant choisie de manière à coopérer avec la couche absorbante (5 ou 15 ou 115 ou 215) pour donner un effet de miroir sombre pour une certaine longueur d'onde et la couche absorbante est une couche d'îlots en or, support caractérisé par un revêtement de polymère sur la couche absorbante qui donne des fissures au voisinage de la couche absorbante et permet la migration des îlots d'or dans la couche absorbante.

2. Support d'enregistrement optique selon la revendication 1, caractérisé en ce que le revêtement de polymère est une couche de fluoropolymère.

3. Support d'enregistrement optique selon la revendication 1 ou la revendication 2, caractérisé en ce que les fissures se présentent sous la forme de canaux disposés et dimensionnés pour favoriser la mobilité des îlots d'or pour ceux-ci puissent s'agglomérer facilement sous l'effet d'une énergie de rayonnement sans reposer sur un phénomène d'ablation, de formation de bourrelets ou de formation de bulles.

4. Support d'enregistrement optique selon l'une quelconque des revendications précédentes, caractérisé en ce que la couche d'espacement est une couche de dioxyde de silicium.

5. Support d'enregistrement optique selon l'une quelconque des revendications 1 à 3, caractérisé en ce qu'il comporte une couche de dépôt (ST) entre la couche d'espacement et la couche absorbante.

6. Support d'enregistrement optique selon la revendication 5, caractérisé en ce que la couche de dépôt est un léger dépôt de silice.

7. Support d'enregistrement optique selon la revendication 5, caractérisé en ce que la couche de dépôt est du chrome.

8. Support d'enregistrement optique selon la revendication 5, caractérisé en e que la couche de dépôt est du fluorure de magnésium.

9. Support d'enregistrement optique selon la revendication 5, caractérisé en ce que la couche de dépôt est de l'oxyde de bismuth.

10. Support d'enregistrement optique selon la revendication 8, caractérisé en ce que la couche d'espacement est une couche de fluoroplastique.

11. Support d'enregistrement optique selon la revendication 10, caractérisé en ce que la couche de fluoroplastique est un fluoropolymère.

12. Procédé de fabrication d'un support d'enregistrement optique (2, 3, 4, 5 ou 12, 13, 14, 15 ou 112, 113, 114, 115 ou 212, 213, 214, 215, ST), caractérisé en ce qu'il se compose des phases suivantes:

—on dépose une couche réfléchissante (3 ou 13 ou 113 ou 213) sur un substrate (2 ou 12 ou 112 ou 212);

—on dépose une couche d'espacement transparente (4 ou 14 ou 114 ou 214) sur la couche réfléchissante;

—on dépose une couche de dépôt (ST) sur la couche d'espacement;

—on dépose une couche absorbante 5 ou 15 ou 115 ou 215) sur la couche de dépôt; et

—on dépose un revêtement (OC) sur la couche absorbante, la couche absorbante étant une couche d'îlots d'or et le revêtement étant un revêtement de polyme6re favorisant des fissures au voisinage de la couche absorbante pour permettre la migration des îlots d'or dans la couche absorbante.

13. Procédé selon la revendication 12, caractérisé en ce que le revêtement de polymère souple (OC) est une couche de fluoropolymère.

14. Procédé d'enregistrement d'informations sur un support d'enregistrement selon la revendication 1, caractérisé en ce qu'on déplace un faisceau de lumière modulé d'une longueur d'onde prédéterminée par rapport au support, l'énergie du faisceau étant choisie pour enregistrer l'information en faisant agglomérer lesîlots d'our pour réduire le nombre d'îlots et augmenter l'écartement entre les îlots à chaque emplacement de bit, les fissures du revêtement étant dimensionnées pour donner le moibilité maximale aux îlots lorsqu'ils sont soumis au rayonnement à une longueur d'onde prédéterminée et une énergie choisie.

# FIG.1.

# FIG.2.

# FIG.3.

# FIG.4.

# FIG.5.

215
ST
214
213
212-S
212

Z-AR

# FIG.6.

(e)

15p

15v

15v

gc

gc

# FIG.7.

## REFLECTANCE OF TRILAYERS.

# FIG.8.

# FIG.9.

# FIG.10.

EP 0 139 507 B1

FIG.11.

FIG.12.

FIG.13.

EP 0 139 507 B1

FIG.15.

FIG.14.

FIG.17.

FIG.16.

FIG.19.

FIG.18.

FIG.21.

FIG.20.